# EUROPÄISCHE PATENTSCHRIFT

(11) **EP 2 828 946 B1**
(45) Veröffentlichungstag und Bekanntmachung des Hinweises auf die Patenterteilung: **12.06.2019**
(21) Anmeldenummer: 13707131.2
(22) Anmeldetag: 19.02.2013
(51) Int. Cl.: H02J 7/00

(54) **SPEICHER FÜR ELEKTRISCHE ENERGIE SOWIE AUFNAHMEVORRICHTUNG FÜR MINDESTENS EINEN SPEICHER FÜR EIN ELEKTRISCH ANTREIBBARES FAHRZEUG**
STORAGE MEANS FOR ELECTRICAL ENERGY AND HOLDING APPARATUS FOR AT LEAST ONE STORAGE MEANS FOR A VEHICLE WHICH CAN BE ELECTRICALLY DRIVEN
ACCUMULATEUR D'ÉNERGIE ÉLECTRIQUE ET DISPOSITIF SERVANT À SUPPORTER AU MOINS UN ACCUMULATEUR DESTINÉ À UN VÉHICULE À PROPULSION ÉLECTRIQUE

(30) Priorität: 21.03.2012 DE 102012204538
(43) Veröffentlichungstag der Anmeldung: 28.01.2015
(73) Patentinhaber: Robert Bosch GmbH, 70442 Stuttgart (DE)
(72) Erfinder: WALDE, Norbert, 91785 Pleinfeld (DE); KOHLRAUSCH, Philipp, 70180 Stuttgart (DE)
(86) Internationale Anmeldenummer: PCT/EP2013/053255
(87) Internationale Veröffentlichungsnummer: WO 2013/139549

(56) Entgegenhaltungen:
- US-A- 5 703 467
- US-A- 5 945 803
- US-A1- 2011 198 103
- US-B1- 6 184 660

## Beschreibung

### Stand der Technik

Die vorliegende Erfindung betrifft elektrisch antreibbare Fahrzeuge, wie z.B. Fahrräder oder Automobile. Bei solchen Fahrzeugen können Speicher für elektrische Energie in manchen Ausführungen einzeln und vergleichsweise unkompliziert ins Fahrzeug eingebracht werden, um z.B. das Fahrzeug für eine bevorstehende Fahrt auszurüsten, und anschließend dem Fahrzeug entnommen werden, um durch einen vollen Energiespeicher ersetzt zu werden. Um das Fahrzeuggewicht nicht unnötig zu erhöhen, kann mitunter die Anzahl von in das Fahrzeug eingebrachten Energiespeichern der veranschlagten Fahrtstrecke angepasst werden. Eine zeitgleiche Entnahme elektrischer Energie aus mehreren Speichern birgt dabei jedoch das Risiko, dass sogenannte Umladungsvorgänge zwischen Energiespeichern unterschiedlicher Spannung bzw. Ladezustände zu sehr hohen Strömen führen können, welche das System und/oder die Speicher selbst schädigen können. Dieses Problem besteht sowohl im Betrieb (Energieentnahme) als auch während des Ladevorgangs (Energiezufuhr). Daher ist es im Stand der Technik bekannt, durch sogenanntes "aktives Powermanagement" (kontrolliertes Zuschalten von Batterien mittels eines Batteriemanagementsystems) die Energieentnahme bzw. die Energieaufnahme jeweils nur im Bezug auf einen vorbestimmten Speicher des Verbundes durchzuführen. Wenn der Speicher einen vordefinierten Lade- oder Entladezustand erreicht hat, sorgt das aktive Powermanagement dafür, dass die elektrischen Verbindungen zu dem Speicher getrennt werden und ein zweiter Speicher zugeschaltet wird. Eine Alternative zum Powermanagement ist ein passives Netzwerk, welches aus Dioden besteht und unerwünschte Umladungsvorgänge verhindert. Letzteres hat jedoch den Nachteil, dass hohe Verluste entstehen und große Dioden sowie gegebenenfalls aktive Kühlung erforderlich sind.

Die Druckschrift US 6,184,660 B1 beschreibt ein Batterieladegerät, welches zum Aufladen einer intelligenten Batterie eingerichtet ist. Innerhalb des Batterieladegerätes ist ein Spannungsteiler angeordnet, dessen Ausgang zur Batteriespannungsüberwachung verwendet wird.

Die Druckschrift US 5,703,467 A beschreibt eine Batterie, welche mittels eines Ladegerätes aufgeladen werden kann. Innerhalb der Batterie ist ein extern kontaktierbarer Spannungsteiler angeordnet. Über eine in der Batterie angeordnete Diode wird sichergestellt, dass der Spannungsteiler lediglich durch das Ladegerät mit elektrischer Energie versorgt wird, nicht jedoch über einen Energiespeicher der Batterie selbst. Über eine in dem Ladegerät angeordnete Auswerteeinheit kann eine Auswertung einer an einem extern kontaktierbaren und zwischen Bauelementen des Spannungsteilers angeordneten Abgriff des Spannungsteilers anliegenden Spannung erfolgen. Über einen in dem Ladegerät angeordneten und in seinen leitenden Zustand geschalteten Transistor kann der Spannungsteiler kurzgeschlossen werden. Das Ladegerät kann den Spannungsteiler mit elektrischer Spannung nur dann versorgen, wenn der Transistor in seinen nicht leitenden Zustand geschaltet ist. Über den Transistor kann keine Versorgung des Spannungsteilers mit von dem Energiespeicher der Batterie selbst bereitgestellter elektrischer Energie erfolgen.

Die Druckschrift US 2011/0198103 A1 beschreibt elektrisch betreibbare Werkzeuge, die zur Aufnahme mehrerer Batterien mit einem Adapter versehen werden können. In einem Ausführungsbeispiel ist ein elektrisches Werkzeug mit einem durch den Adapter kontaktierbaren Spannungsteiler ausgestattet. Dazu ist ein Ausgang des Spannungsteilers über einen außerhalb des jeweiligen Werkzeuges liegenden Zusatzkontakt durch einen elektrischen Zusatzkontakt des Adapters kontaktierbar. An dem Adapter wiederum sind zwei externe Energiespeicher angeschlossen

Druckschrift US 5945803 A beschreibt eine Aufnahmevorrichtung für eine Batterie mit 3 Anschlüssen, wobei die Aufnahmevorrichtung einen Spannungsteiler aufweist, dessen Mittelabgriff mit einem der 3 Batterieanschlüsse verbunden ist.

Für ein intelligentes aktives Powermanagement eines Speicherverbundes ist es erforderlich, dass genaue Informationen darüber vorliegen, wie der einzelne Speicher angesprochen (hinzugeschaltet) werden kann. Mit anderen Worten muss feststellbar sein, welcher Speicher in welchem Steckplatz eines sogenannten "Frames" (Rahmen bzw. Halterung für den Speicherverbund) angeordnet ist. Es ist daher eine Aufgabe der vorliegenden Erfindung, eine kostengünstige und robuste Möglichkeit bereitzustellen, die Speicher eines Speicherverbundes mit geringem Hardwareaufwand und geringem Energieverbrauch bei geringer zusätzlicher Systemkomplexität zu identifizieren.

### Offenbarung der Erfindung

Die vorstehend genannte Aufgabe wird gelöst durch einen Speicher für elektrische Energie mit den Merkmalen nach Anspruch 1. Der Speicher kann dabei beispielsweise ein elektrochemischer Speicher (z.B. Batterie oder Brennstoffzelle) sein, welcher in einem Gehäuse angeordnet ist. An der Außenseite des Gehäuses sind ein erster elektrischer Kontakt (Pluspol) und ein zweiter elektrischer Kontakt (Minuspol) angeordnet, um elektrische Energie in den Speicher oder aus dem Speicher zu übertragen. Des Weiteren kann der Speicher einen Spannungsteiler umfassen, welcher durch einen ersten Schalter mit Spannung versorgt werden kann. Diese Spannung kann mittels des Speichers selbst bereitgestellt werden. Mit anderen Worten können mehrere in Reihe geschaltete Widerstände (ohmsch oder komplex) mit elektrischer Energie beaufschlagt werden, wenn der Schalter geschlossen ist. An einer vorbestimmten Position des Spannungsteilers kann ein elektrischer Zusatzkontakt angeordnet sein, über welchen ein Spannungsabgriff zwischen zwei Bauelementen des Spannungsteilers erfolgen kann. Erfindungsgemäß kann weiter eine Auswerteeinheit im Speicher angeordnet sein, welche eingerichtet ist, eine an dem Zusatzkontakt anliegende elektrische Spannung gegenüber einem vordefinierten Referenzpotential (z.B. Masse) zu messen und die gemessene Spannung mit einem vordefinierten Referenzwert oder vordefinierten Referenzwerten zu vergleichen. Hierzu kann der Speicher zusätzlich einen Informationsspeicher umfassen, in welchem einerseits Referenzwertbereiche und andererseits zugehörige Positionen innerhalb einer Aufnahmevorrichtung für Speicher miteinander in Verbindung gebracht und abgelegt sind. Mit anderen Worten kann über eine Spannungsmessung eine eindeutige Zuordnung des Speichers zu einer in der Aufnahmevorrichtung vorgesehenen einzelnen Aufnahme für einen Speicher erfolgen. Zusätzlich kann der Speicher weitere Steuergeräte, wie z.B. Bussteuergeräte (CAN, MOST, Flex-Ray) umfassen, über welche der Speicher Informationen mit seiner Peripherie austauschen und erhaltene Informationen in seinem Informationsspeicher ablegen kann. Beispielsweise können dies aktualisierte Zuordnungen zwischen Referenzwertebereichen und Aufnahmepositionen innerhalb einer Aufnahmevorrichtung sein. Es versteht sich von selbst, dass der Speicher weiter eine Einheit zur Speicherung elektrischer Energie (z.B. Lithium-Ionen-Zellen) umfasst, mittels welcher beispielsweise ein Fahrzeug angetrieben werden kann.

Die Unteransprüche zeigen bevorzugte Weiterbildungen der Erfindung.

Gemäß einer Weiterbildung kann der Speicher einen zweiten Schalter umfassen, welcher über einen Widerstand mit einer Spannungsquelle verbunden ist. Die Spannungsquelle kann dabei innerhalb des Speichers bereitgestellt werden oder extern (also außerhalb des Speichers) angeordnet sein. Eine bevorzugte Ausführungsform für den Schalter kann ein Feldeffekttransistor, beispielsweise ein MOSFET, sein, dessen Gate-Anschluss eingerichtet ist, ein Steuersignal zu erhalten. An einem Abgriff zwischen dem Schalter und dem Widerstand ist eine sogenannte Wake-up-Leitung angeschlossen, wobei diese im Falle eines offenen Schalters das Potential der Spannungsquelle und im Falle eines leitenden zweiten Schalters Masse-Potential annimmt. Eine Steuerleitung (z.B. Gate-Anschluss des MOSFET) ist mit dem Zusatzkontakt des Speichers verbunden, so dass ein vordefiniertes Potential, welches am Zusatzkontakt des Speichers angelegt wird, den Schalter einschaltet (leitend schaltet) bzw. ein unterhalb des vordefinierten Schwellwertes angelegtes elektrisches Potential am Zusatzkontakt den zweiten Schalter öffnet. Selbstverständlich ist eine entgegengesetzte Funktionsweise in Abhängigkeit des eingesetzten Schalters bzw. in Abhängigkeit des eingesetzten Transistortyps ebenso realisierbar.

Weiter bevorzugt kann die Auswerteeinheit des Speichers eingerichtet sein, den ersten Schalter (zugehörig zum Spannungsteiler des Speichers) intermittierend leitend zu schalten. Mit anderen Worten wird der zwischen den Widerständen des Spannungsteilers angeordnete Zusatzkontakt durch den sich einstellenden Stromfluss im Ansprechen auf ein am ersten Schalter angelegtes Steuersignal auf ein vordefiniertes elektrisches Potential angehoben. Alternativ oder zusätzlich kann die Auswerteeinheit eingerichtet sein, eine intermittierende Messung der am Zusatzkontakt anliegenden elektrischen Spannung vorzunehmen. Bevorzugt können die Spannungsmessung und das Einschalten des ersten Schalters dabei zeitgleich erfolgen, so dass die Spannungsmessung zu einem Zeitpunkt erfolgt, in welchem der Stromfluss des elektrischen Zusatzkontakt auf ein von 0 V (entspricht Masse) verschiedenes elektrisches Potential anhebt. Hierdurch besteht die Möglichkeit, die zur Messung der elektrischen Spannung sowie zum Anheben des elektrischen Potentials erforderliche Energie gering zu halten.

Gemäß einem weiteren Aspekt der vorliegenden Erfindung wird eine Aufnahmevorrichtung für mindestens zwei Speicher für elektrische Energie mit einer ersten Aufnahme für einen Speicher zur Verfügung gestellt. Dabei kann der aufzunehmende Speicher ein, wie oben diskutiert, ausgestalteter Speicher für elektrische Energie sein. Die Aufnahmevorrichtung enthält einen der ersten Aufnahme zugeordneten ersten elektrischen Kontakt und einen der zweiten Aufnahme zugeordneten zweiten elektrischen Kontakt zur Übertragung elektrischer Energie in einen in der Aufnahme angeordneten Speicher oder aus dem in der Aufnahme angeordneten Speicher heraus. Des Weiteren ist ein erster elektrischer Zusatzkontakt innerhalb der Aufnahme angeordnet, welcher eingerichtet ist, mit einem elektrischen Zusatzkontakt eines in der Aufnahme vorhandenen Speichers verbunden zu werden. Insbesondere kann sich eine Verbindung zwischen den entsprechenden Kontakten der Aufnahme und des Speichers automatisch einstellen, wenn ein Speicher in die Aufnahme eingesetzt wird. Die Aufnahmevorrichtung, also der "Frame", kann einen der ersten Aufnahme zugeordneten ersten Spannungsteiler umfassen, dessen Teilungsverhältnis der ersten Aufnahme zugeordnet ist. Mit anderen Worten ist das Teilungsverhältnis so gewählt, dass es innerhalb der Aufnahmevorrichtung keine zweite Aufnahme mit demselben Teilungsverhältnis gibt. Ein Abgriff zwischen zwei Elementen des Spannungsteilers der Aufnahme kann eingerichtet sein, über den ersten Zusatzkontakt mit einem Zusatzkontakt eines in die Aufnahme eingesetzten Speichers elektrisch verbunden zu werden. Mit anderen Worten kann ein in einem Speicher, welcher in die Aufnahme eingesetzt worden ist, enthaltener Spannungsteiler derart mit dem Spannungsteiler der Aufnahme verbunden werden, dass die Abgriffe (also die Punkte zwischen jeweils zwei Elementen eines jeweiligen Spannungsteilers) miteinander verbunden werden. Mit anderen Worten werden die jeweils gegen Masse geschalteten Elemente des jeweiligen Spannungsteilers parallel geschaltet. Da ein jedes Teilungsverhältnis eines Spannungsteilers einen Speicher gegenüber einer Vielzahl anderer Speicher eindeutig identifizierbar macht und ein Teilungsverhältnis eines in einer Aufnahme angeordneten Spannungsteilers die jeweilige Aufnahme gegenüber anderen Aufnahmen eindeutig identifizierbar macht, kann bei geeigneter Wahl der Teilungsverhältnisse auch eine beliebige Kombination eines Speichers und einer Aufnahme anhand der sich ergebenden elektrischen Schaltung identifiziert und die Kombination durch eine Spannungsmessung ermittelt werden.

Weiter bevorzugt weist die Aufnahmevorrichtung einen elektrischen Anschluss auf, welcher eingerichtet ist, sowohl den ersten elektrischen Kontakt als auch den zweiten elektrischen Kontakt (Pluspol bzw. Minuspol zur Übertragung der elektrischen Energie) sowie den elektrischen Zusatzkontakt der Aufnahme mit einem elektrischen Verbinder, z.B. einem Stecker, jeweils elektrisch zu verbinden. Hierzu kann der elektrische Anschluss als Buchse ausgestaltet sein, in welche ein Stecker eines korrespondierenden Netzteils als Lader eingesteckt werden kann. Dabei kann der Spannungsteiler der Aufnahme eingerichtet sein, über den elektrischen Anschluss mit elektrischer Energie versorgt zu werden. Vorteilhaft kann der elektrische Anschluss einen Sammelanschluss darstellen, so dass die vorgenannten elektrischen Kontakte innerhalb eines Gehäuses zusammengefasst sind, was den Steckvorgang erleichtert.

Gemäß einem weiteren Aspekt der vorliegenden Erfindung wird ein elektrisch antreibbares Fahrzeug zur Verfügung gestellt, welches insbesondere als Fahrrad oder als Automobil (z.B. Pkw, Lkw) ausgestaltet ist. Das erfindungsgemäße Fahrzeug umfasst dabei eine Aufnahmevorrichtung, wie sie oben diskutiert worden ist. Alternativ oder zusätzlich kann das Fahrzeug einen Speicher umfassen, wie er oben diskutiert worden ist. Selbstverständlich kann auch das Fahrzeug ein Bussystem umfassen, an welches die erfindungsgemäße Aufnahmevorrichtung und/oder der erfindungsgemäße Speicher anschließbar sind. Insbesondere können die Aufnahmevorrichtung und der Speicher im Betrieb automatisch mit dem Bussystem verbunden sein, mit anderen Worten also nach dem Einsetzen des Speichers in die am Fahrzeug bzw. im Fahrzeug angeordnete Aufnahmevorrichtung automatisch in das Bussystem integriert sein.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Übersicht über Komponenten der vorliegenden Erfindung;
- Figur 2: eine schematische Übersicht über Anschlüsse und Komponenten eines erfindungsgemäßen Speichers;
- Figur 3: eine Übersicht über Komponenten und Anschlüsse einer erfindungsgemäßen Aufnahmevorrichtung;
- Figur 4: eine Übersicht über Komponenten und Anschlüsse eines mit dem erfindungsgemäßen System verwendbaren Ladegerätes ("Lader");
- Figur 5: eine mögliche Konfiguration einer Aufnahme in einer Aufnahmevorrichtung beim Laden eines Speichers in der Aufnahmevorrichtung;
- Figur 6: eine Übersicht möglicher Konfigurationen zwischen einem Ladegerät, einem erfindungsgemäßen Speicher und (in einem Beispiel) einer erfindungsgemäßen Aufnahmevorrichtung.

### Ausführungsformen der Erfindung

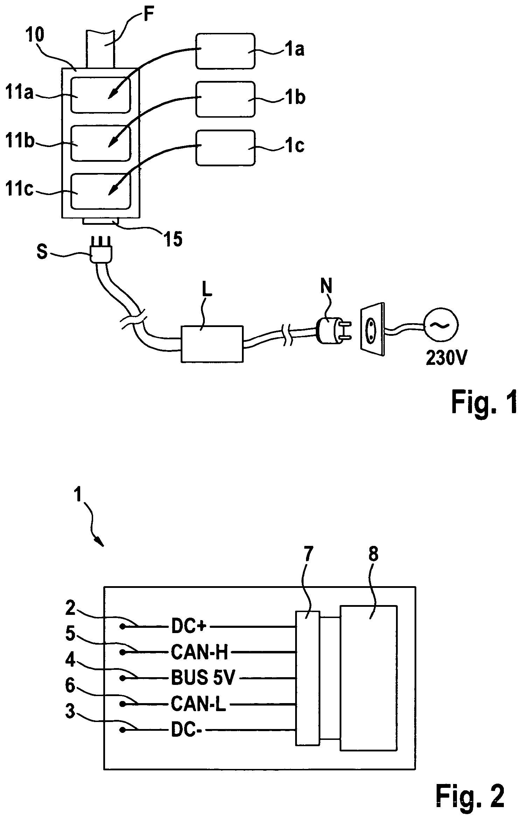

In Figur 1 ist eine Aufnahmevorrichtung 10 an einem Rahmenteil eines Fahrrades F angeordnet. Die Aufnahmen 11a, 11b und 11c sind dazu eingerichtet, Speicher 1a, 1b und 1c aufzunehmen. Am unteren Ende der Aufnahmevorrichtung 10 ist ein elektrischer Anschluss 15 vorgesehen, über welchen die Aufnahmevorrichtung 10 über einen Stecker S mit einem Ladegerät L verbunden werden kann. Letzteres ist eingerichtet, über einen Netzstecker N Energie aus einem elektrischen Versorgungsnetz (z.B. 230V) zu beziehen. Die dargestellten Komponenten werden im Folgenden anhand der weiteren Figuren im Detail diskutiert.

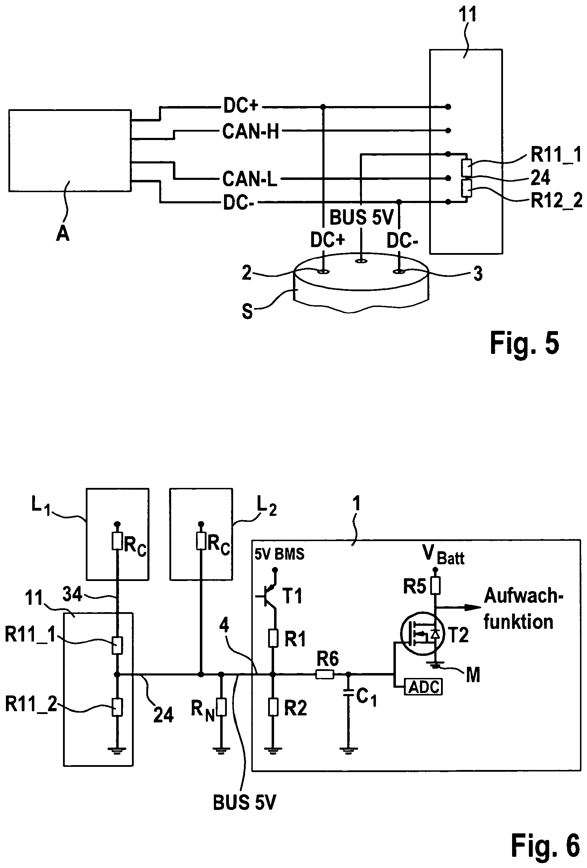

Figur 2 zeigt einen Speicher 1 mit fünf elektrischen Anschlüssen. Ein Pluspol als erster elektrischer Kontakt 2 und ein Minuspol als zweiter elektrischer Kontakt 3 sind für die Übertragung der elektrischen Energie aus den Zellen 8 vorgesehen, wobei die Zellen 8 beispielsweise Lithiumionen bzw. Lithiumpolymerzellen sein können. Ein sogenannter "CAN high"-Anschluss (CAN-H) 5 und ein "CAN low"-Anschluss (CAN-L) 6 sind zur Verbindung des Batteriemanagement-Systems (BMS) 7 mit einem lokalen Bussystem vorgesehen. Des Weiteren ist ein "Bus 5 V"-Anschluss als Zusatzkontakt 4 vorgesehen, dessen Funktionsweise insbesondere in Verbindung mit Figur 6 im Detail beschrieben wird. Das Batteriemanagementsystem 7 ist dazu eingerichtet, Informationen mit der Peripherie auszutauschen und in Abhängigkeit ermittelter Informationen beispielsweise eine elektrische Verbindung der Zellen 8 mit den elektrischen Kontakten 2 und 3 herzustellen.

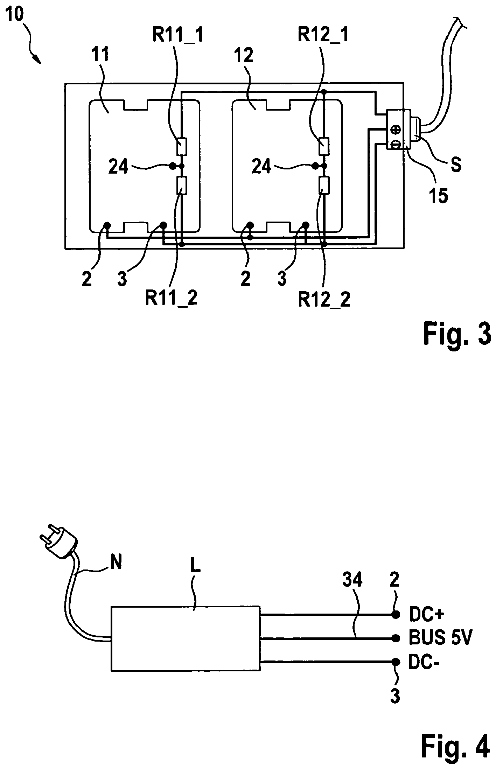

Figur 3 zeigt eine Aufnahmevorrichtung 10 für zwei Speicher, welche jeweils in die Aufnahmen 11 und 12 eingesetzt werden können. Zur Übertragung der elektrischen Energie zwischen der Aufnahmevorrichtung 10 und den Speichern 1 sind in der ersten Aufnahme 11 und in der zweiten Aufnahme 12 jeweils elektrische Kontakte 2 und 3 vorgesehen. Diese sind jeweils über elektrische Leitungen mit einem elektrischen Anschluss 15 der Aufnahmevorrichtung 10 verbunden. Ein Stecker S eines (nicht dargestellten) Ladegerätes L ist mit dem elektrischen Anschluss 15 verbunden. Des Weiteren sind in den Aufnahmen 11 und 12 ohmsche Spannungsteiler angeordnet, wobei der Spannungsteiler der ersten Aufnahme 11 aus einem ersten Widerstand R_{11_1} und einem zweiten Widerstand R_{11_2} besteht und der Spannungsteiler der zweiten Aufnahme 12 aus einem ersten Widerstand R_{12_1} und einem zweiten Widerstand R_{12_2} besteht. Zwischen den Widerständen der Spannungsteiler ist jeweils ein elektrischer Zusatzkontakt 24 angeordnet, über welchen in die Aufnahmen 11 und 12 eingesetzte Speicher mit einem Spannungsabgriff der Spannungsteiler verbunden werden können. Die Spannungsteiler der Aufnahmevorrichtung 10 werden über einen elektrischen Zusatzkontakt des Ladegerätes L mit einer Gleichspannung (z.B. 5 V) versorgt und sind auf ihrer gegenüberliegenden Anschlussseite mit dem Minuspol als zweitem elektrischem Kontakt 3 verbunden.

Figur 4 zeigt ein Ladegerät L, welches einen Netzstecker N zur Verbindung mit einem elektrischen Versorgungsnetz (z.B. 230 V Wechselspannung) aufweist. Innerhalb des Ladegeräts L sind (nicht dargestellte) Spannungswandler vorhanden, welche eine Spannungswandlung zwischen der Netzspannung und einer zum Laden von elektrischen Speichern 1 notwendigen Spannung (z.B. 30 Vbis 40 V Gleichspannung) vornehmen können. Diese elektrische Versorgungsspannung kann über die elektrischen Kontakte 2 und 3 entweder an eine Aufnahmevorrichtung 10 oder direkt an einen Speicher 1 abgegeben werden. Zusätzlich umfasst das Ladegerät L einen Bus 5 V-Anschluss als elektrischen Zusatzkontakt 34. Über diesen Bus 5 V-Kontakt kann das Ladegerät L nach dem Verbinden mit einer Aufnahmevorrichtung 10 die in der Aufnahmevorrichtung 10 vorgesehenen Spannungsteiler R_{11_1} und R_{11_2} bzw. R_{12_1} und R_{12_2} mit Spannung versorgen. Sofern das Ladegerät L direkt (also nicht über eine Aufnahmevorrichtung 10) mit einem Speicher 1 verbunden wird, wird der Bus 5 V-Kontakt 34 mit dem elektrischen Zusatzkontakt 4 des Speichers 1 verbunden und weckt somit (wie in Verbindung mit Figur 6 diskutiert wird) das Batteriemanagementsystem eines Speichers 1.

Figur 5 zeigt eine Aufnahme 11 einer Aufnahmevorrichtung 10, welche einerseits mit dem Energie- und Informationssystem (DC+, DC-; CAN-H, CAN-L) A eine Fahrzeugs F und andererseits mit einem Stecker S eines (nicht dargestellten) Ladegerätes L verbunden ist. Zwischen dem Bus 5 V-Kontakt und dem zweiten elektrischen Kontakt 3 ist der aus den Widerständen R_{11_1} und R_{11_2} bestehende Spannungsteiler der Aufnahme 11 angedeutet.

Figur 6 zeigt mögliche Konfigurationen sowie die elektrischen Verbindungen erfindungsgemäßer Komponenten über die jeweiligen elektrischen Zusatzkontakte 4, 24, 34 eines Speichers 1, einer Aufnahme 11 und eines Ladegerätes L. Hierbei sind die Leitungen für den Transport der elektrischen Energie aus den Zellen 8 der Übersichtlichkeit halber nicht dargestellt. Zudem sind die Ladegeräte L₁ und L₂ als Alternativen zu verstehen. Mit anderen Worten wird zunächst der Fall diskutiert, dass das Ladegerät L₁ über die Aufnahme 11 mit dem Speicher 1 verbunden ist und anschließend die Alternative diskutiert, dass das Ladegerät L₂ direkt mit dem Speicher 1 verbunden ist.

In einem ersten Fall ist das Ladegerät L₁ elektrisch mit einer Aufnahmevorrichtung 10 verbunden, in welcher sich die dargestellte Aufnahme 11 befindet. In der Aufnahme 11 sind Widerstände R_{11_1} und R_{11_2} als Spannungsteiler gegen Masse geschaltet. Zwischen den beiden Widerständen R_{11_1} und R_{11_2} ist ein elektrischer Zusatzkontakt 24 der Aufnahme 11 vorgesehen. Zwischen dem in die Aufnahme 11 eingesetzten Speicher 1 und der Aufnahme 11 ist ein parasitärer Nebenschluss in Form eines Widerstandes R_{N} zwischen dem elektrischen Zusatzkontakt 4 des Speichers 1 und der Masse des Fahrzeugs F berücksichtigt. Es versteht sich von selbst, dass dieser Umgebungsbedingungen modelliert und nicht tatsächlich als elektrisches Bauelement vorgesehen ist. Innerhalb des Speichers 1 ist ein aus den Widerständen R1 und R2 bestehender Spannungsteiler gegen Masse geschaltet. Zwischen dem Widerstand R1 und der Versorgungsspannung 5 V BMS ist ein Bipolartransistor T1 als erster Schalter vorgesehen. Mit dem Spannungsabgriff des aus den Widerständen R1 und R2 bestehenden Spannungsteilers ist ein Eingangswiderstand R6 verbunden, welcher den Spannungsteiler mit einem Analog-Digital-Wandler (ADC) verbindet. Mittels des ADC ist der Speicher 1 eingerichtet, eine Spannung im Rahmen seiner Auflösung zu messen bzw. zu kategorisieren. Zwischen dem Widerstand R6 und dem Analog-Digital-Wandler ist eine Kapazität C1 gegen Masse geschaltet. Mit dem Zusammenschaltungspunkt zwischen dem Widerstand R6 und dem Analog-Digital-Wandler ist der Gate-Anschluss eines zweiten Transistors T2 als zweiter Schalter verbunden. Der Transistor T2 ist als MOSFET ausgeführt und zwischen Masse und einem Widerstand R5 bzw. zwischen Masse und einer Wake-up-Leitung angeordnet. Andererseits ist der Widerstand R5 mit einer Versorgungsspannung V_{batt} verbunden, welche im dargestellten Beispiel durch die Speicherzellen 8 des Speichers 1 bereitgestellt wird.

Im Folgenden wird die Funktionsweise der ersten Alternative beschrieben, welche den Fall darstellt, dass das Ladegerät L₁ über die Aufnahmevorrichtung 10 bzw. die Aufnahme 11 mit dem Speicher 1 verbunden ist. Zunächst wird der Fall beschrieben, dass sich das Batteriemanagementsystem des Speichers 1 im Tiefschlaf befunden hat, als das Ladegerät L₁ an die Aufnahmevorrichtung 10 angeschlossen worden ist. Indem der elektrische Zusatzkontakt 34 des Ladegerätes L₁ den Spannungsteiler der Aufnahme 11 mit elektrischer Spannung versorgt, hebt er das Potential des elektrischen Zusatzanschlusses 4 des Speichers 1 auf ein von 0 verschiedenes Potential. Über den Widerstand R6 wird somit auch der bis dahin sperrende MOSFET T2 mit elektrischer Spannung versorgt und schaltet zwischen source und drain durch ("ein"). Infolgedessen wird ein Stromfluss zwischen der Spannungsquelle V_{batt} und der elektrischen Masse M zu einem Abfall des Potentials an der Wake-up-Leitung führen, da aufgrund des Stromflusses Spannung am Widerstand R5 abfällt. Mit anderen Worten ist der Speicher 1 bzw. sein Batteriemanagementsystem geweckt worden und hat im Folgenden festzustellen, ob es geladen bzw. entladen werden soll und ob gegebenenfalls weitere vorhandene Speicher im Verbund dabei zu berücksichtigen sind. Nach dem Wecken wird das Batteriemanagementsystem des Speichers 1 daher eine Spannungsmessung durch den Analog-Digital-Wandler vornehmen, um seine Position bzw. eine Spannung, welche seiner aktuellen Position zugeordnet ist, festzustellen. Dieser Spannungswert wird durch die 5 V-Spannung des Ladegerätes L₁, seinen (geringen) Innenwiderstand R_{C}, den ersten Widerstand R_{11_1} sowie die parallel geschalteten Widerstände R_{11_2}, R_{N} und R₂ definiert. Da der Speicher 1 den Widerstand R₂ kennt, der Widerstand R_{C} gegenüber den übrigen Widerständen sehr klein ist (zu vernachlässigen), der parasitäre Nebenschluss (R_{N}) sehr hochohmig und durch die Abstände der kategorisierten Spannungen berücksichtigt ist und die Spannung des Ladegerätes 5 V ist, kann das Verhältnis des Spannungsteilers der Aufnahme 11 ermittelt werden. Zumindest aber ist bei einer geeigneten Wahl der im System definierten Spannungsteilerverhältnisse eine Kategorisierung der vom ADC gemessenen Spannung dahingehend möglich, dass eine Identifikation der jeweils aktuell durch den Speicher 1 belegten Aufnahme 11 möglich ist. Anschließend kann das Batteriemanagementsystem des Speichers 1 über (nicht dargestellte) CAN-Leitungen Informationen an seine Peripherie senden, in welchen seine Identität, seine aktuelle Position (Adresse) sowie Ladezustandsdaten, Temperatur und weitere Kenngrößen enthalten sein können. Je nachdem, welche Informationen das Batteriemanagementsystem des Speichers 1 daraufhin über CAN-Leitungen (z.B. vom Energie Master des Systems) erhält, kann es eine Abgabe bzw. Aufnahme elektrischer Leistung aus den Zellen 8 ermöglichen, also die Kontakte der Zellen 8 mit dem Energiebordnetz verbinden.

Im Folgenden wird die Alternative diskutiert, dass das Ladegerät L₂ direkt mit dem elektrischen Zusatzkontakt 4 des Speichers 1 verbunden wird. Die Konstellation und die Vorgänge sind im Wesentlichen mit denen der Alternative 1 identisch. Jedoch ist nun kein Spannungsteiler einer Aufnahme 11 involviert, so dass ein gemessener Spannungswert nach dem Aufwecken des Batteriemanagementsystems des Speichers 1 und nach Abklingen der Einschaltvorgänge im Wesentlichen der 5 V-Spannung des Ladegerätes L entspricht. Entsprechend erkennt das Batteriemanagementsystem des Speichers 1, dass das Ladegerät L direkt mit dem Speicher 1 verbunden ist und keine weiteren Speicher im Verbund zu berücksichtigen sind. Entsprechend veranlasst das Batteriemanagementsystem des Speichers 1, die Zellen 8 des Speichers 1 mit den (nicht dargestellten) Energieleitungen zu verbinden, um elektrische Energie aus dem Ladegerät L₂ aufzunehmen. Somit ist sichergestellt, dass ein Ladevorgang auch unabhängig von einer Aufnahmevorrichtung 10 bzw. ohne entsprechende CAN-Nachrichten vorgenommen werden kann.

Im Folgenden wird der Fall beschrieben, dass der Speicher 1 in eine Aufnahmevorrichtung 10 eingesetzt ist und ein Anwender das Fahrrad F verwenden möchte. Zum Start des Fahrvorgangs weckt der Anwender das System mittels einer Anwenderinteraktion (z.B. Drücken eines Startknopfes), welcher den Speicher 1 beispielsweise über (nicht dargestellte) CAN-Leitungen oder beispielsweise eine Wake-up-Leitung direkt weckt. Da während des Fahrvorgangs kein Ladegerät L mit dem Speicher 1 oder einer Aufnahmevorrichtung 10 verbunden ist, ist das Batteriemanagementsystem eingerichtet, selbständig den ersten Schalter in Form des Bipolartransistors T1 zu schließen, was zu einer Bestromung des Spannungsteilers, bestehend aus den Widerständen R1 und R2, führt. Sofern der Speicher 1 ordnungsgemäß in eine Aufnahme 11 eingesetzt ist, ist der Widerstand R_{11_2} parallel zum Widerstand R2 geschaltet, wodurch mittels einer Spannungsmessung festgestellt werden kann, in welche Aufnahme der Aufnahmevorrichtung 10 der Speicher 1 aktuell eingesetzt ist. Da für den Fall, dass der Speicher 1 in keine Aufnahme eingesetzt ist, auch kein Widerstand parallel zum zweiten Widerstand R2 des speicherinternen Spannungsteilers geschaltet ist, kann auch dieser Fall vom Speicher 1 erkannt werden. Wie bereits zuvor erläutert, erfolgt im nächsten Schritt ein Senden der Information an einen Master des Systems (z.B. via CAN-Leitungen), welcher entscheidet, welcher der im Verbund gegebenenfalls vorhandenen Speicher 1 zum Zwecke der Fortbewegung zu entladen ist. Auf eine entsprechende Rückmeldung seitens des Masters an den jeweiligen Speicher 1 gibt dieser die in seinen Zellen 8 enthaltene Energie über einen ersten und einen zweiten Kontakt (nicht dargestellt) an eine Antriebseinheit A des Fahrrades F ab.

Die Informationen, welche der Speicher 1 über das lokale Bus-System sendet, können selbstverständlich auch verwendet werden, um beispielsweise ein am Fahrzeug vorhandenes Display mit Informationen zu versorgen, welche dem Anwender Aufschluss darüber geben, in welchem Zustand die Speicherzellen des Speicherverbundes sind und welche voraussichtlich verbleibende Fahrstrecke sich hieraus ergibt.

Wie oben beschrieben, kann die Entscheidung, welcher Speicher 1 zu einem jeweiligen Zeitpunkt zu laden bzw. zu entladen ist, von einem häufig als "Energy-Master", also eine Instanz zur Steuerung der Energieflüsse im Verbund aus Speichern und Antriebseinheit, gefällt werden. Die Anordnung einer solchen Instanz im Verbund ist grundsätzlich vielerorts möglich, so dass sämtliche über die z.B. via CAN-Leitung versendeten Informationen erhaltenden Instanzen des Verbundes eine solche Entscheidung fällen könnten. Beispielsweise könnte ein in der Aufnahmevorrichtung 10 angeordneter Mikroprozessor über den CAN-Bus Informationen über die Belegung der Aufnahmen 11 und 12 mit Speichern 1 sowie deren Zustände erhalten und Lade- bzw. Entladevorgänge steuern, indem er entsprechende Informationen über den Bus an die Speicher 1 im Verbund sendet. Hierzu weisen die Speicher 1 jeweils eigene CAN-Controller (Steuergeräte zur Unterstützung von CAN-Kommunikation) auf, mittels welcher sie die Informationen empfangen und gegebenenfalls quittieren können.

Eine Beaufschlagung der erfindungsgemäßen Spannungsteiler mit elektrischer Energie kann ebenso wie eine Messung der sich daraufhin einstellenden Spannung am elektrischen Zusatzkontakt 4, 24 kontinuierlich oder intermittierend durchgeführt werden, um einerseits eine zuverlässige Erkennung einer veränderten Systemkonfiguration zu ermöglichen, andererseits den Energie- und Messaufwand für eine solche Erkennung gering zu halten. Insbesondere kann eine Bestromung der Spannungsteiler durch die Wake-up-Leitung im Speicher 1 erkannt und eine Messung der sich einstellenden Spannung durch den ADC erst im Ansprechen auf eine solche Bestromung veranlasst werden.

Da der Speicher 1 bzw. sein Batteriemanagementsystem erkennen kann, ob er bzw. es den Bipolartransistor T1 als ersten Schalter ein- oder ausgeschaltet hat, kann bei offenem erstem Schalter und einer zu 0 V gemessenen Spannung gefolgert werden, dass der Lader nicht verbunden ist. Mit anderen Worten erfolgt in diesem Falle keine Auswertung, der Speicher 1 wird nicht geladen und schläft - sofern keine anders lautenden CAN-Botschaften empfangen werden - nach einer vordefinierten Zeit ein. Zuvor kann er eine gegebenenfalls vorhandene elektrische Verbindung seiner Zellen 8 mit der elektrischen Peripherie des Fahrzeugs F trennen, um die Entladung der Zellen 8 zu verhindern. Sofern der Bipolartransistor T1 ausgeschaltet ist und die ermittelte Spannung größer als 0 ist, kann daraus geschlossen werden, dass eine externe Spannungsquelle, beispielsweise in Form eines Ladegerätes L, angeschlossen ist. Für den Fall, dass der Speicher 1 über eine Aufnahme 11 einer Aufnahmevorrichtung 10 geladen wird, kann unter Vermittlung des Spannungsteilers, welcher sich aus der Zusammenschaltung des Widerstandes R2 des Speichers 1 und des Spannungsteilers der Aufnahme 11 ergibt, die Aufnahme 11 eindeutig identifiziert werden. Für den Fall, dass das Ladegerät L direkt an den Speicher 1 gesteckt ist, stellt sich ein Spannungswert nahe der vom elektrischen Zusatzkontakt 34 des Ladegeräts L gelieferten Spannung (z.B. 5 V) ein, da der Innenwiderstand R_{C} des Ladegeräts L deutlich kleiner ist als die übrigen elektrischen Widerstände des Systems. Somit kann auch dieser Fall eindeutig erkannt und vom Speicher adäquat reagiert werden. Für den Fall, dass bei ausgeschaltetem Bipolartransistor T1 die ermittelte Spannung 0 V ist, kann daraus gefolgert werden, dass kein Ladegerät L angeschlossen ist. Sofern in einem solchen Fall das Batteriemanagementsystem eine Identifikation derjenigen Aufnahme 11, in welcher sich der Speicher 1 aktuell befindet, durchführen möchte, veranlasst es ein Aktivieren des Bipolartransistors T1, im Ansprechen worauf über den sich einstellenden Spannungswert am elektrischen Zusatzkontakt 4 die Aufnahme 11 erkannt werden kann. Für den Fall, dass kein parallel zum Widerstand R2 geschalteter Widerstand vorhanden ist, erkennt der Speicher 1, dass er nicht in eine Aufnahme 11 eingesetzt ist. Im Ergebnis bietet sich eine einfache, zuverlässige und effiziente Möglichkeit, Zustände und Position des Speichers 1 zu erkennen und die gewonnenen Informationen im Verbund eines elektrisch antreibbaren Fahrzeugs zu verwenden.

Zusammenfassend wird ein Speicher für elektrische Energie sowie eine Aufnahmevorrichtung für mindestens zwei Speicher für elektrische Energie vorgeschlagen, in welchen jeweils ein Spannungsteiler angeordnet ist, welcher über jeweils einen externen, elektrischen Zusatzkontakt kontaktierbar ist. Indem das Teilungsverhältnis des innerhalb der Aufnahmevorrichtung angeordneten Spannungsteilers für eine bestimmte Aufnahme charakterisierend ist, kann über eine Spannungsmessung am Abgriffspunkt zwischen den Widerständen der Speicher feststellen, in welcher Aufnahme der Aufnahmevorrichtung er angeordnet ist. Da bei einem Ladevorgang ohne Aufnahmevorrichtung kein Spannungsteiler mit dem Speicher verbunden wird, kann nicht nur eine jeweilige Aufnahme identifiziert werden, sondern auch festgestellt werden, dass der Speicher sich nicht in einer Aufnahmevorrichtung zum Laden befindet. Indem der Speicher bzw. sein Batteriemanagementsystem selbst für eine Bestromung des ihm inhärenten Spannungsteilers sorgen kann, kann eine Erkennung auch unabhängig davon erfolgen, ob ein Ladegerät mit der Aufnahmevorrichtung oder dem Speicher direkt verbunden ist. Zudem ist eine Wake-up-Funktion über den elektrischen Zusatzkontakt des Speichers vorgesehen.

Die Erfindung ist vorstehend im Detail und anhand konkreter Ausführungsbeispiele beschrieben worden, die der Veranschaulichung dienen. Für den Fachmann ergeben sich jedoch darauf aufbauend viele Möglichkeiten, Modifikationen vorzunehmen, Merkmale der offenbarten Ausführungsbeispiele miteinander zu kombinieren und insbesondere Dimensionierungsvorschriften anzuwenden, ohne den Bereich der vorliegenden Erfindung zu verlassen, dessen Schutzbereich durch die beigefügten Ansprüche definiert wird.

## Patentansprüche

1. Speicher für elektrische Energie, umfassend:
- ein Gehäuse,
- mindestens einen ersten elektrischen Kontakt (2) und einen zweiten elektrischen Kontakt (3) an der Außenseite des Gehäuses zur Übertragung elektrischer Energie in den Speicher (1) oder aus dem Speicher (1),
- einen ersten Schalter (T1), insbesondere in Form eines Bipolartransistors,
- einen Spannungsteiler (R1, R2), und
- einen elektrischen Zusatzkontakt (4) an der Außenseite des Gehäuses zur externen Kontaktierung eines Spannungsabgriffs zwischen Bauelementen des Spannungsteilers (R1, R2),
**dadurch gekennzeichnet, dass**
der Spannungsteiler (R1, R2) dazu eingerichtet ist, über den ersten Schalter (T1) mit einer mittels des Speichers (1) bereitgestellten Spannung versorgt werden zu können,
wobei der Speicher (1) ferner eine Auswerteeinheit (ADC) umfasst, welche eingerichtet ist, eine am Zusatzkontakt (4) anliegende elektrische Spannung zu messen und hinsichtlich vordefinierter Referenzwertebereiche auszuwerten.

2. Speicher nach Anspruch 1, weiter umfassend
- einen zweiten Schalter (T2), insbesondere in Form eines Feldeffekttransistors, bevorzugt eines MOSFETs, welcher über einen Widerstand (R5) mit einer Spannungsquelle (Vbatt) verbunden ist und eingerichtet ist, im Ansprechen auf eine am elektrischen Zusatzkontakt (4) anliegende Spannung eine leitende Verbindung zwischen dem Widerstand (R5) und der elektrischen Masse (M) herzustellen.

3. Speicher nach Anspruch 1 oder 2, wobei
- die Auswerteeinheit (ADC) eingerichtet ist, eine intermittierende Messung der am Zusatzkontakt (4) anliegenden elektrischen Spannung vorzunehmen, oder
- der Speicher (1) eingerichtet ist, den ersten Schalter (T1) intermittierend leitend zu schalten.

4. Aufnahmevorrichtung für mindestens zwei Speicher (1) für elektrische Energie, mit einer ersten und einer zweiten Aufnahme (11) für jeweils einen Speicher (1), wobei die erste und zweite Aufnahme jeweils
- mindestens einen ersten elektrischen Kontakt (2) und einen zweiten elektrischen Kontakt (3) zur Übertragung elektrischer Energie in einen Speicher (1) oder aus einem Speicher (1), und
- einen elektrischen Zusatzkontakt (24),
aufweist,
wobei
- ein der ersten Aufnahme (11) zugeordneter erster Spannungsteiler (R11_1, R11_2) mit einem der ersten Aufnahme (11) zugeordneten Teilungsverhältnis, und
- ein der zweiten Aufnahme (11) zugeordneter zweiter Spannungsteiler (R12_1, R12_2) mit einem der zweiten Aufnahme (11) zugeordneten Teilungsverhältnis, und
- ein elektrischer Anschluss (15), welcher eingerichtet ist, den ersten elektrischen Kontakt (2), den zweiten elektrischen Kontakt (3) sowie den jeweiligen Spannungsteiler (R11_1, R11_2, R12_1, R12_2) mit einem elektrischen Verbinder (S), insbesondere einem Ladegerät (L) elektrisch zu verbinden
vorgesehen ist,
wobei
- der elektrische Zusatzkontakt (24) der jeweiligen Aufnahme (11, 12) dazu eingerichtet ist, mit einem elektrischen Zusatzkontakt (4) eines in der entsprechenden Aufnahme (11, 12) eingesetzten Speichers (1) verbunden zu werden, und
- ein Abgriff des entsprechenden Spannungsteilers (R11_1, R11_2, R12_1, R12_2) der Aufnahme (11, 12) mit dem ersten Zusatzkontakt (24) verbunden ist, und
- der erste Spannungsteiler ein Teilungsverhältnis aufweist, welcher der ersten Aufnahme zugeordnet ist und der zweite Spannungsteiler ein Teilungsverhältnis aufweist, welcher der zweiten Aufnahme zugeordnet ist, wobei innerhalb der Aufnahmevorrichtung keine zwei Aufnahmen das gleiche Teilungsverhältnis aufweisen so dass über die Erfassung des Teilungsverhältnisses eine Identifikation der Aufnahme, in der sich ein Speicher befindet, möglich wird.

5. Speicher nach einem der Ansprüche 1 bis 3, oder Aufnahmevorrichtung nach Anspruch 4, wobei der Spannungsteiler (R11_1, R11_2; R1, R2) aus ohmschen Widerständen besteht.

6. Speicher nach einem der Ansprüche 1 bis 3 oder 5, oder eine Aufnahmevorrichtung nach einem der Ansprüche 4 oder 5 mit einer Schnittstelle für ein Bus-System, insbesondere nach dem CAN-Standard.

7. Elektrisch antreibbares Fahrzeug, insbesondere Fahrrad, umfassend eine Aufnahmevorrichtung (10) nach einem der Ansprüche 4 oder 5 und/oder einen Speicher (1) nach einem der Ansprüche 1 bis 3, 5 oder 6.

## Claims

1. Store for electrical energy, comprising:
- a housing,
- at least a first electrical contact (2) and a second electrical contact (3) on the outside of the housing for transmitting electrical energy to the store (1) or from the store (1),
- a first switch (T1), in particular in the form of a bipolar transistor,
- a voltage divider (R1, R2), and
- an electrical additional contact (4) on the outside of the housing for making external contact with a voltage tap between components of the voltage divider (R1, R2),
**characterized in that**
the voltage divider (R1, R2) is set up to be able to be supplied with a voltage provided by means of the store (1) via the first switch (T1),
wherein the store (1) also comprises an evaluation unit (ADC) which is set up to measure an electrical voltage applied to the additional contact (4) and to evaluate it with respect to predefined reference value ranges.

2. Store according to Claim 1, also comprising
- a second switch (T2), in particular in the form of a field effect transistor, preferably a MOSFET, which is connected to a voltage source (Vbatt) via a resistor (R5) and is set up, in response to a voltage applied to the electrical additional contact (4), to establish a conductive connection between the resistor (R5) and the electrical earth (M).

3. Store according to Claim 1 or 2, wherein
- the evaluation unit (ADC) is set up to carry out an intermittent measurement of the electrical voltage applied to the additional contact (4), or
- the store (1) is set up to intermittently turn on the first switch (T1).

4. Receiving apparatus for at least two stores (1) for electrical energy, having a first and a second receptacle (11) for one store (1) in each case, wherein the first and second receptacles each have
- at least a first electrical contact (2) and a second electrical contact (3) for transmitting electrical energy to a store (1) or from a store (1), and
- an electrical additional contact (24),
wherein
- a first voltage divider (R11_1, R11_2) which is assigned to the first receptacle (11) and has a division ratio assigned to the first receptacle (11), and
- a second voltage divider (R12_1, R12_2) which is assigned to the second receptacle (11) and has a division ratio assigned to the second receptacle (11), and
- an electrical connection (15) which is set up to electrically connect the first electrical contact (2), the second electrical contact (3) and the respective voltage divider (R11_1, R11_2, R12_1, R12_2) to an electrical connector (S), in particular a charger (L),
are provided,
wherein
- the electrical additional contact (24) of the respective receptacle (11, 12) is set up to be connected to an electrical additional contact (4) of a store (1) inserted in the corresponding receptacle (11, 12), and
- a tap of the corresponding voltage divider (R11_1, R11_2, R12_1, R12_2) of the receptacle (11, 12) is connected to the first additional contact (24), and
- the first voltage divider has a division ratio which is assigned to the first receptacle and the second voltage divider has a division ratio which is assigned to the second receptacle, wherein no two receptacles have the same division ratio inside the receiving apparatus, with the result that it becomes possible to identify the receptacle in which a store is situated by capturing the division ratio.

5. Store according to one of Claims 1 to 3, or receiving apparatus according to Claim 4, wherein the voltage divider (R11_1, R11_2; R1, R2) comprises non-reactive resistors.

6. Store according to one of Claims 1 to 3 or 5, or a receiving apparatus according to either of Claims 4 and 5, having an interface for a bus system, in particular according to the CAN standard.

7. Electrically driveable vehicle, in particular bicycle, comprising a receiving apparatus (10) according to either of Claims 4 and 5 and/or a store (1) according to one of claims 1 to 3, 5 or 6.

## Revendications

1. Accumulateur pour énergie électrique, comprenant :
- un boîtier,
- au moins un premier contact électrique (2) et un deuxième contact électrique (3) au niveau du côté extérieur du boîtier servant à la transmission d'énergie électrique dans l'accumulateur (1) ou depuis l'accumulateur (1),
- un premier commutateur (T1), notamment sous la forme d'un transistor bipolaire,
- un diviseur de tension (R1, R2) et
- un contact supplémentaire (4) électrique sur le côté extérieur du boîtier servant à un contact externe avec une prise de tension entre les composants du diviseur de tension (R1, R2),
**caractérisé en ce que**
le diviseur de tension (R1, R2) est conçu pour pouvoir être alimenté par le biais du premier commutateur (T1) avec une tension délivrée au moyen de l'accumulateur (1), l'accumulateur (1) comportant en outre une unité d'interprétation (ADC) qui est conçue pour mesurer une tension électrique appliquée au contact supplémentaire (4) et l'interpréter du point de vue de plages de valeurs de référence prédéfinies.

2. Accumulateur selon la revendication 1, comprenant en outre un deuxième commutateur (T2), notamment sous la forme d'un transistor à effet de champ, de préférence un MOSFET, lequel est relié à une source de tension (Vbatt) par le biais d'une résistance (R5) et conçu pour, en réaction à une tension appliquée au contact supplémentaire (4) électrique, établir une liaison conductrice entre la résistance (R5) et la masse électrique (M).

3. Accumulateur selon la revendication 1 ou 2,
- l'unité d'interprétation (ADC) étant conçue pour effectuer une mesure intermittente de la tension électrique appliquée au contact supplémentaire (4) ou
- l'accumulateur (1) étant conçu pour commuter par intermittence le premier commutateur (T1) à l'état passant.

4. Dispositif d'accueil pour au moins deux accumulateurs (1) pour énergie électrique, comprenant un premier et un deuxième logement (11) pour respectivement un accumulateur (1), le premier et le deuxième logement possédant respectivement
- au moins un premier contact électrique (2) et un deuxième contact électrique (3) servant à la transmission d'énergie électrique dans un accumulateur (1) ou depuis un accumulateur (1), et
- un contact supplémentaire (24) électrique, dispositif avec lequel sont prévus
- un premier diviseur de tension (R11_1, R11_2) associé au premier logement (11) ayant un rapport de division associé au premier logement (11), et
- un deuxième diviseur de tension (R12_1, R12_2) associé au deuxième logement (11) ayant un rapport de division associé au deuxième logement (11), et
- une borne électrique (15), laquelle est conçue pour relier électriquement le premier contact électrique (2), le deuxième contact électrique (3) ainsi que les diviseurs de tension (R11_1, R11_2, R12_1, R12_2) respectifs à un connecteur électrique (S), notamment d'un chargeur (L),
dispositif avec lequel
- le contact supplémentaire (24) électrique du logement (11, 12) respectif est conçu pour être relié à un contact supplémentaire (4) électrique d'un accumulateur (1) inséré dans le logement (11, 12) correspondant, et
- une prise du diviseur de tension (R11_1, R11_2, R12_1, R12_2) respectif du logement (11, 12) est reliée au premier contact supplémentaire (24), et
- le premier diviseur de tension présente un rapport de division qui est associé au premier logement et le deuxième diviseur de tension présente un rapport de division qui est associé au deuxième logement, aucun des deux logements à l'intérieur du dispositif d'accueil ne présentant le même rapport de division, de sorte qu'une identification du logement dans lequel se trouve un accumulateur est rendue possible par la détection du rapport de division.

5. Accumulateur selon l'une des revendications 1 à 3 ou dispositif d'accueil selon la revendication 4, le diviseur de tension (R11_1, R11_2 ; R1, R2) se composant de résistances ohmiques.

6. Accumulateur selon l'une des revendications 1 à 3 ou 5 ou dispositif d'accueil selon l'une des revendications 4 ou 5, comprenant une interface pour un système de bus, notamment selon la norme CAN.

7. Véhicule pouvant être propulsé électriquement, notamment bicyclette, comprenant un dispositif d'accueil (10) selon l'une des revendications 4 ou 5 et/ou accumulateur (1) selon l'une des revendications 1 à 3, 5 ou 6.
